# EUROPEAN PATENT APPLICATION

(11) **EP 1 947 543 A1**
(43) Date of publication of application: **23.07.2008**
(21) Application number: 07291504.4
(22) Date of filing: 12.12.2007
(51) Int. Cl.: G05D 23/19, F24F 11/00

(54) **Method and apparatus for providing extended range wireless remote control of ductless space conditioning systems**

(30) Priority: 18.12.2006 US 612027
(71) Applicant: Rosen, Howard B., Montréal, QC H4P 1K5 (CA)
(72) Inventor: Rosen, Howard B., Montréal, QC H4P 1K5 (CA)
(74) Representative: Louiset, Raphael

(57) **Abstract**

A ductless HVAC system is controlled by light frequency signals, for example, in the infrared (IR) band. A repeater within the line-of-sight of the ductless HVAC system is used in concert with a remote thermostat. A user may operate the remote thermostat as desired, and the remote thermostat generates and broadcasts an RF signal stream responsive to the user-entry. This suitably encoded RF signal stream penetrates any wall or other opaque impediment to light frequency transmission and is received by the repeater, decoded by the repeater, re-encoded by the repeater into a signal suitable for driving an IR transmitter and broadcast as an IR beam to the receiver/interface.

## Description

This invention relates generally to apparatus for controlling the operation of space conditioning equipment and, more particularly, to a wireless thermostat for "ductless" HVAC systems.

"Central" heating, ventilating, and air conditioning (HVAC) systems include thermostats (typically wall mounted at a suitable position in the conditioned space) to operate as a temperature sensitive switch to turn on or off and/or to adjust other parameters to thus effect operational control for HVAC equipment. In the manner common in that art, a simple thermostat can be adjusted by a user to establish one or more temperature set points such that, when the temperature of the thermostat reaches a set point, the thermostat interacts with the HVAC central equipment to take suitable action to heat or cool the conditioned space within a set temperature range. The conditioned air is distributed, using a blower, through a duct network from and to suitable inlets and outlets in the conditioned space.

In recent years, another class of HVAC systems has become very popular because of ease of installation, versatility, simplicity and economy. HVAC systems of this class are commonly known as "ductless" systems because no duct-work is employed whereas conventional central HVAC systems require the installation and maintenance of expensive and space consuming supply and return ducts as well as inlets and outlets.

More particularly, "ductless" HVAC units are characterized by the use of an outdoor condenser component and a closely-coupled indoor air handler component. For example, in a "mini-split" ductless unit, the condenser component supplies compressed coolant directly to the air handler component through refrigerant lines that run through a small opening in an outside wall or in the ceiling of the conditioned space which typically constitutes one or a very few contiguous rooms. The air handler component incorporates a blower to draw in supply air, from the room in which it is installed, through an inlet such that the air passes across an evaporator/heat exchanger which includes coils carrying the compressed refrigerant. The refrigerant is allowed to controllably expand in the heat exchanger such that the heat exchanger is cold and thus cools the air before it is discharged back into the conditioned space.

One or more individually controlled mini-split systems may be employed for cooling any sized and configured contiguous area to achieve efficient, compact and ductless operation. Heat for such an area may be supplied by other equipment, or heat pump mini-split systems may be employed for both cooling and heating in suitable environments.

Other examples of ductless HVAC units include the well-known window units and through-the-wall units which are operationally the same, but may differ in length to accommodate the thickness of the "outside" wall which may require a longer unit. These ductless units are integrated into a single case, but are functionally equivalent to the mini-split units and also usually supply heat as needed, either configured as a heat pump or employing an internal electrical heating element. Thus, it will be understood that the term "ductless" as used herein includes mini-split, window, through-the-wall and similar non-central HVAC systems.

Handheld light frequency (usually infrared) or radio frequency wireless remote controls are sometimes provided by the manufacturer with a given ductless system so that a user may adjust the temperature set point(s) of the unit and turn the unit on and off from a position remote from the ductless unit. At the state of the art, some of the radio frequency wireless remote controls for ductless systems may also be programmed to function as thermostats because they include temperature sensors to better reflect the ambient temperature at or near a user or users than a temperature sensor integral with the ductless system itself. Typically, RF remote controls send system ID information along with control information to the ductless system in order to prevent inadvertent control interference with another ductless system within the range of the RF signal.

In those ductless systems supplied with a light frequency remote control, a significant problem arises if the conditioned space includes more than one room such as a small apartment or house. The light frequency signals from the remote control cannot penetrate the walls between the rooms. Thus, a user in another part of the conditioned space must move to the room in which the air handler component of the ductless HVAC system is installed to use the remote control. While a user may prefer that the ambient temperature be measured, and control of the ductless HVAC system carried out from, a different room, but this cannot be achieved with a light frequency remote control.

A ductless HVAC system is controlled by light frequency signals, for example, in the infrared (IR) band. As supplied from a manufacturer, a remote control accessory can send line-of-sight signals to a receiver/interface integral with the HVAC system. However, the manufacturer supplied remote control is unusable in areas of the conditioned space which is not in the line-of-sight to the ductless HVAC system. The inconveniences of this consequence are clear: if a user is in another room in the conditioned space and wishes to effect control over the ductless HVAC system, the user must physically leave the occupied room and enter an area in which the supplied remote control is within the line-of-sight of the HVAC system.

In accordance with embodiments of the invention, a repeater within the line-of-sight of the ductless HVAC system is used in concert with a remote thermostat placed in an area of the conditioned space which is not within the line-of-sight of the HVAC system. A user may operate the remote thermostat as desired, and the remote thermostat generates and broadcasts an RF signal stream responsive to the user-entry. This suitably encoded RF signal stream penetrates any wall or other opaque impediment to light frequency transmission and is received by the repeater, decoded by the repeater, re-encoded by the repeater into a signal suitable for driving an IR transmitter and broadcast as an IR beam to the receiver/interface. In certain embodiments of the invention, the repeater adds control information to the IR signal broadcast to the receiver/interface. Thus, the control apparatus in the ductless HVAC system is able to interpret the received information stream to direct operation as the user operating the thermostat intends. In some installations, multiple ductless HVAC systems, each with its own repeater within the line-of-sight, may be operated independently or in parallel from a single remote thermostat.

The subject matter of the invention is particularly pointed out and distinctly claimed in the concluding portion of the specification. The invention, however, both as to organization and method of operation, may best be understood by reference to the following description taken in conjunction with the subjoined claims and the accompanying drawing of which:
FIG. 1, Prior Art, shows, in plan view, a conditioned space having three contiguous rooms and incorporating a ductless space conditioning system to illustrate an environment into which embodiments of the invention can be incorporated;
FIG. 2 is a view similar to FIG. 1 showing the incorporation of embodiments of the invention;
FIG. 3, Prior Art, is a block diagram of exemplary circuitry used for controlling ductless space conditioning equipment;
FIG. 4 is a block diagram of a remote thermostat used as a first component in a thermostat system for controlling ductless space conditioning equipment, in embodiments of the invention, from throughout the conditioned space;
FIG. 5 is a block diagram of a repeater used as a second component in a thermostat system for controlling ductless space conditioning equipment, in embodiments of the invention, from throughout the conditioned space;
FIG. 6 illustrates one exemplary manner for user programming the remote thermostat; and
FIG. 7 illustrates embodiments of the invention in which the thermostat system controls a plurality of ductless space conditioning systems either independently or in parallel.

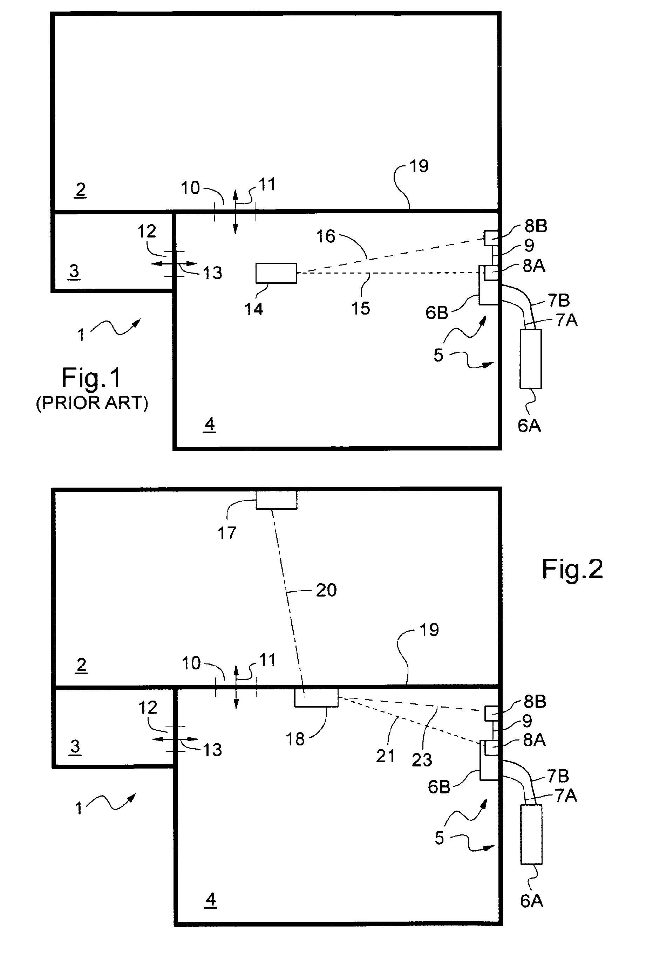

Referring first to FIG. 1, an exemplary contiguous conditioned space 1 includes a first room 2, a second room 3 and a third room 4. A ductless HVAC system 5 includes an outdoor compressor component 6A and an indoor air handler component 6B coupled together with refrigerant supply and return lines 7A, 7B. Those skilled in the art will understand that the ductless HVAC system 5 shown in FIG. 1 is a mini-split as described above, but is only representative of a ductless class HVAC system.

A remote control 14, provided by the manufacturer with the ductless system 5, affords a user management of the HVAC system 5 by wireless signals (represented by the beam 15) sent from the remote control to an internal receiver/interface 8A in the air handler 6B. (Alternatively, an external receiver/interface 8B may be situated near the air handler 6B and electrically coupled to the air handler by conductor set 9; with this arrangement, the wireless signals are represented by the beam 16.) The signals transmitted between the remote control 14 and the receiver/interface 8A (8b) include serial information, in a protocol used by the manufacturer of a given unit, representing the operations, settings, etc. which a user may wish to bring about by operation of the remote control. Such remote controls are often implemented using light frequency (usually in the infra-red (IR) band) communication in a suitable serial digital format. Those skilled in the art will understand that a light frequency signal cannot penetrate an opaque barrier such as the wall 19 intermediate rooms 2 and 4. (However, it is also well known that the beam for light frequency line-of-sight operation need not be perfectly aimed from a transmitter to a receiver because indirect communication can often be obtained by, for example, "banking" the beam off a wall or other object.)

The contiguous rooms 2 and 4 have a vent 10 providing air flow in both directions as indicated by the arrow 11. Similarly, the contiguous rooms 3 and 4 have a vent 12 providing air flow in both directions as indicated by the arrow 13. Doors (not shown) may be suitably provided to allow passage among the rooms 2, 3, 4 and ingress/egress outside the rooms.

Those skilled in the ductless HVAC art will understand that FIG. 1 as described above represents the use of known commercially-available ductless HVAC systems, using light frequency control signals, in an exemplary environment.

Assume now, for purposes of disclosing some embodiments of the invention, that the HVAC system 5 is controlled by light frequency signals in the infrared (IR) band. Thus, the manufacturer supplied remote control 14 sends line-of-sight signals to the receiver/interface 8A (8B); therefore, the remote control is unusable in rooms 2 and 3, either of both of which may more often be occupied by users than room 1 in which the air handler 6B is installed. The inconveniences of this consequence are clear: if a user is in either room 2 or 3 and wishes to effect control over the ductless HVAC system 5, the user must physically leave the occupied room and enter the room 1 to use the remote control 14. Further, consider that a user may be a handicapped individual who can move from room to room only with difficulty or even not at all; e.g., a bed-ridden patient.

Embodiments of the invention which overcome all these problems are shown in FIG. 2. While the remote control 14 (FIG. 1) may optionally still be used in room 4, a repeater 18 in room 4 is used in embodiments of the invention in concert with a remote thermostat 17 placed in a room (room 2 in the example) different from that in which the air handler 6B is installed. The repeater 18 and the remote thermostat 17 will be described in detail below, but, briefly, a user may operate the remote thermostat as desired, and the remote thermostat generates and broadcasts an RF signal stream responsive to the user-entry. This suitably encoded RF signal stream, represented by beam 20, penetrates the wall 19 and is received by the repeater 18, decoded by the repeater, re-encoded by the repeater into a signal suitable for driving an IR transmitter and broadcast as an IR beam 21 (23) to the receiver/interface 8A (8B) of the air handler 6B. Thus, the control apparatus in the air handler 6B is able to interpret the received information stream to direct the operation of the ductless HVAC system 5 as the user operating the remote thermostat 17 in room 2 has specified. Preferably, the repeater 18 is assigned an identification number, and this identification number is included in the RF signal stream to ensure that other like systems are not inadvertently interfered with.

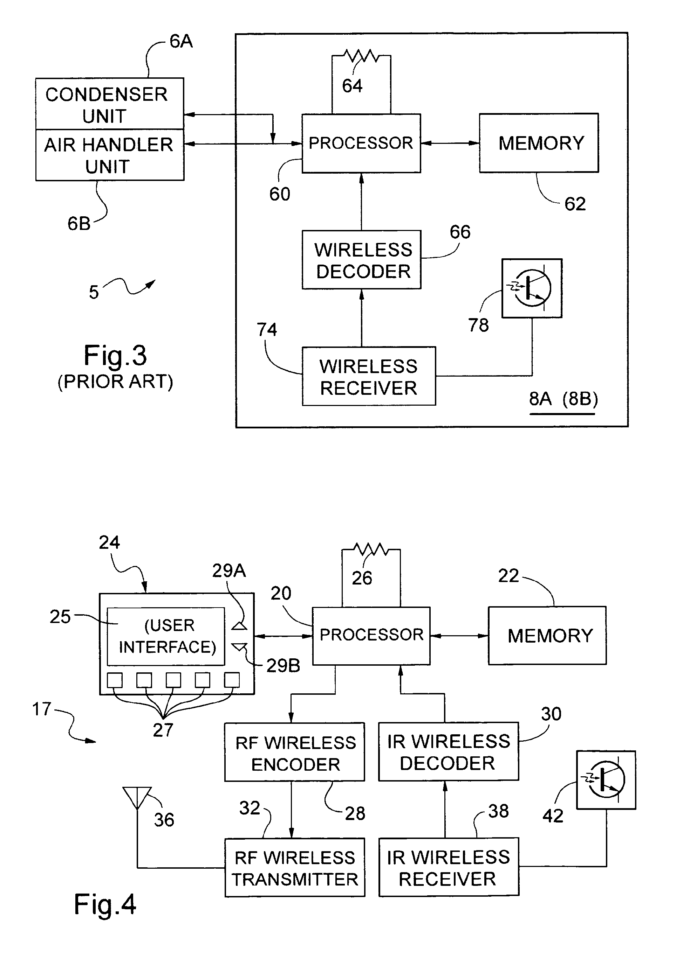

FIG. 3 is a block diagram of an exemplary receiver/interface unit 8A (8B) as supplied by the manufacturer of the ductless HVAC system 5. The receiver/interface 8 includes a processor 60, a memory 62 in operative communication with the processor. a temperature sensor 64 in operative communication with the processor and an IR wireless receiver 74 which receives system communication signals via an IR sensor 78. These signals are sent to an IR wireless decoder 66 which is in operative communication with the processor 60.

The processor 60 employs an HVAC system control program permanently stored in a non-volatile (i.e., factory set) section of the memory 52 which also includes a rewritable section (typically implemented, at the state of the art, as "flash" memory) for temporary storage of command and data information sent to the receiver 8. The temperature sensor 64 provides a temperature sensitive variable (such as resistance) from which the ambient temperature at the sensor may be calculated by the processor 60 for use by the system control program. As previously noted, the receiver may be situated either within (8A) the air handler unit 6B or proximate (8B) the air handler unit.

Referring now to FIG. 4, a block diagram of an exemplary remote thermostat 17 is presented. The remote thermostat 17 includes a processor 20, a memory 22 in operative communication with the processor, a user interface 24 in operative communication with the processor, a temperature sensor 26 in operative communication with the processor and an RF wireless encoder 28 which receives functional signals from the processor. The wireless encoder 28 selectively issues system information signals to an RF wireless transmitter 32 which drives an RF transmitting antenna 36.

The exemplary user interface 24 permits a user to set how the remote thermostat 17 will control the operation of the ductless HVAC system 5 (FIG. 1). To do so, a user can selectively touch various mode switches 27 and value up 29A and value down 29B switches while a liquid crystal (for example) display 25 shows the status of the remote thermostat 17. (Any other suitable thermostat user interface types, such as a display incorporating a touch screen feature instead of discrete switches, can be used in the present application.)

An IR wireless receiver 38 selectively receives system information via an IR sensor 42. These received signals are decoded by an IR wireless decoder 30 which transfers functional signals to the processor 20. The components 30, 38 and 42 are optional, and the operation of these optional components, if used, will be discussed below.

The processor 20 employs a thermostat supervisory program permanently stored in a non-volitile (i.e., factory set) section of the memory 22. In addition, user-settable parameters (e.g., temperature set points, real time clock, operation modes, times during a day period for changing pre-stored upper and lower set points, etc., all as known in the art) may be stored in a rewritable section of the memory (typically implemented, at the state of the art, as "flash" memory).

The temperature sensor 26 provides a temperature sensitive variable (such as resistance) from which the ambient temperature at the sensor may be calculated by the processor 20 for use by the supervisory program to develop and send suitable signals to control the ductless space conditioning equipment (FIG. 2) by wireless communication via the repeater 18 (FIG. 2) as will be explained more fully below.

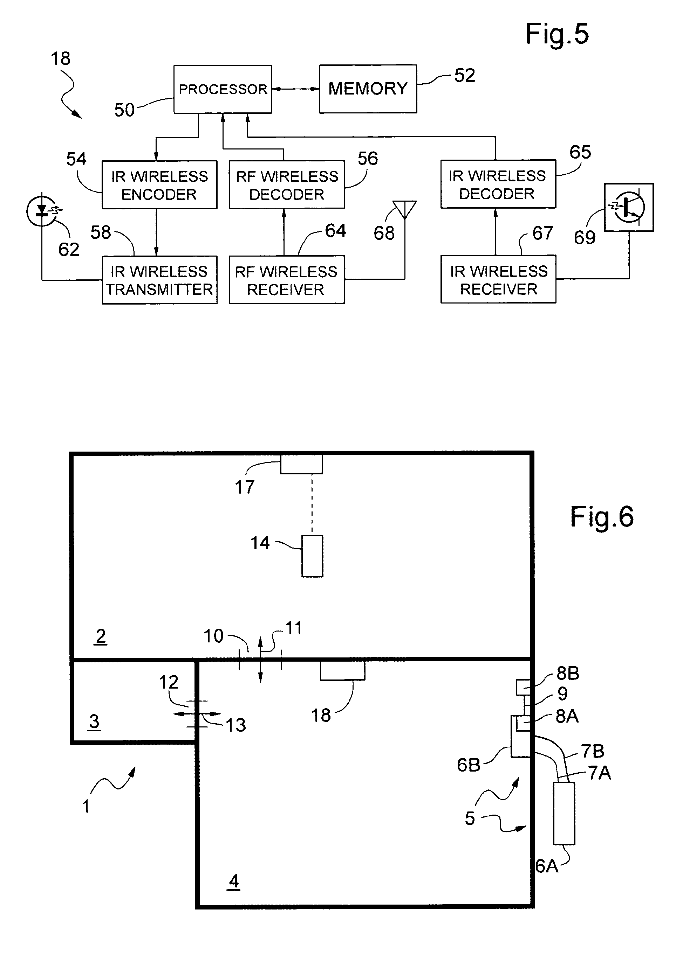

FIG. 5 is a block diagram of an exemplary repeater 18. The repeater 18 includes a processor 50 and a memory 52 in operative communication with the processor. An RF wireless receiver 64 selectively receives system communication signals (which preferably include an identification of the given repeater 18) via an RF receiving antenna 66. These signals are sent to an RF wireless decoder 56 which is in operative communication with the processor 50. An IR wireless encoder 54 in operative communication with the processor 50 selectively issues system communication signals to an IR wireless transmitter 58 which drives an IR emitter 62.

The processor 50 employs a repeater supervisory program permanently stored in a non-volatile (i.e., factory set) section of the memory 52 which also includes a rewritable section (typically implemented, at the state of the art, as "flash" memory) for temporary storage of command and data information processed and transferred by the repeater 18.

An IR wireless receiver 67 selectively receives system information via an IR sensor 69. These received signals are decoded by an IR wireless decoder 65 which transfers functional signals to the processor 50. The components 30, 38 and 42 are optional, and the operation of these optional components, if used, will be discussed below.

The operation of embodiments of the invention shown in FIGs. 2, 3, 4 and 5 will now be described in detail. It will be understood that the control protocols of most or all ductless HVAC systems sold by various manufacturers are all well and publicly known and that these known protocols can be factory-stored in the non-volatile part of the memory 22. In addition, an entry in the memory 22 may store an identification code of the individual repeater 18. (As will be discussed below in conjunction with FIG. 6, contingent provision is made by which the remote thermostat 17 can "learn" a given system protocol which is not which is not available to be entered in the memory 22 at installation.)

Referring first to FIGs. 2 and 4, a user may manipulate the user interface 24 to make entries reflecting the desired control operations to be conveyed to the receiver/interface 8A (8B) from the remote thermostat 17 during ongoing operation. The processor 20, running under the supervisory control program, periodically measures the value of the temperature sensor 26 to calculate a signal representing the ambient temperature at the remote thermostat 17 and obtains from memory 22 the necessary information to develop a serial information set which must be sent to the receiver/interface 8A (8B) to carry out the user's intent. For example, a basic command "start the fan" may be generated by the processor 20 (or even manually invoked by a user), and the control signal set required to carry out this basic command is looked up in the protocol stored in the memory 22.

Referring also to FIG. 5, the serial information set is encoded by the RF wireless encoder 28 and sent to the RF wireless transmitter 32 which drives the RF antenna 36 for broadcast. The encoded RF wireless signal stream, represented by beam 20, penetrates the wall 19 and is received by the RF wireless receiver 64 via the RF antenna 64 of the repeater 18, decoded by the RF wireless decoder 56 and sent to the processor 50. Under control of the repeater supervisory program, the processor ensures that this particular repeater 18 is intended to handle this information stream by checking the received identification code. If so, the same information stream is re-encoded by the IR wireless encoder 54 and sent to the IR wireless transmitter 58 which drives IR emitter 62. Thus, the information stream developed and sent out by the remote thermostat 17 is transformed in the repeater 18 into an IR beam 21 (23) which can be received by the receiver/interface 8A (8B) of the air handler 6B. Accordingly, the control apparatus in the air handler 6B in room 4 is able to interpret the information stream to direct the ongoing operation of the ductless HVAC system 5 as the user operating the remote thermostat 17 in room 2 has specified.

Referring now to FIGs. 4 and 6, it was previously mentioned that, if provided for in the remote thermostat 17, an IR wireless receiver 38 selectively can receive system information signals, from the remote control 14 supplied by the manufacturer, via an IR sensor 42. These received signals are decoded by an IR wireless decoder 30 which transfers functional signals to the processor 20. The processor, operating in a simple "learn" mode invoked by a user or installer, parses the information stream received from the remote control and appropriately stores the information in the memory 22. Thus, the repertoire of the remote control 14 can be methodically sent to the remote thermostat 17 and saved for use in the control of the ductless HVAC system 5 from the remote thermostat as previously described.

Similarly, as shown in FIG. 5, it was previously mentioned that, if provided for in the repeater 18, an IR wireless receiver 67 selectively can receive system information signals, from the remote control 14 supplied by the manufacturer, via an IR sensor 69. These received signals are decoded by an IR wireless decoder 65 which transfers functional signals to the processor 50. The repeater, operating in a simple "learn" mode invoked by a user or installer, parses the information stream received from the remote control and appropriately stores the information in the memory 52. Thus, the repertoire of the remote control 14 can be methodically sent to the repeater 18 and saved for use in the control of the ductless HVAC system 5 from the remote thermostat as previously described.

Another way to enter an unstored protocol into the memory 22 of the remote thermostat 17 is by IR communication with a remote correspondent such that the remote correspondent provides the thermostat with the needed programming information. The remote correspondent may be, for example, a personal data assistant (PDA), laptop computer, local area network, wide area network, wireless handheld device, a Bluetooth device, or similar device which contains the programming information for the unstored protocol. Also, the remote correspondent may interface with the internet in order to acquire programming information about the equipment protocols and, in turn, supply this information to the remote thermostat 17.

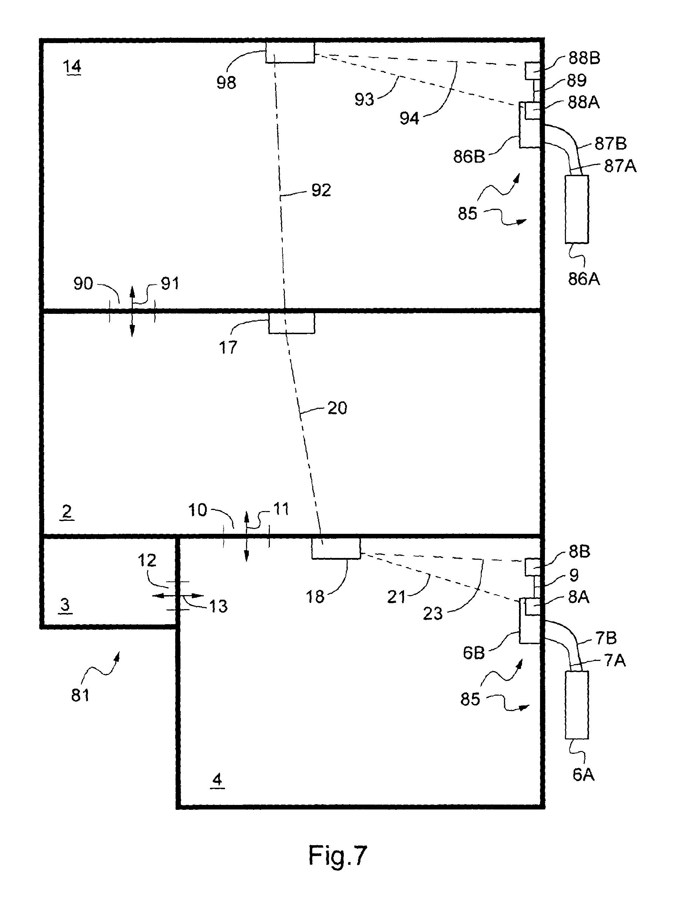

Attention is now directed to FIG. 7 which shows a larger conditioned space which includes rooms 2, 3, 4 previously discussed and also an additional room 14 which has its own ductless HVAC system 85. The contiguous rooms 2 and 44 have a vent 90 providing air flow in both directions as indicated by the arrow 91.

Thus, the second ductless HVAC system 85, also a mini-split, includes an outdoor compressor component 86A and an indoor air handler component 86B coupled together with refrigerant supply and return lines 87A, 87B. The indoor air handler component 86B may include an internal receiver/interface 88A in the air handler 6B, or an external receiver/interface 88B may be situated near the air handler 86B and electrically coupled to the air handler by conductor set 89.

A second repeater 98 is situated in the room 14 such that it can send light frequency signals to the internal receiver/interface 88A (beam 93) or the external receiver/interface 88B (beam 94) as the ductless HVAC system 85 may be equipped. The second repeater 98 in room 14 is identical to the repeater 18 in room 4, but has its own identification code which is also stored in the remote thermostat 17.

It will be apparent that the remote thermostat 17 may selectively send control signals to either or both of the repeaters 18, 98 to obtain operation of both ductless HVAC systems 5, 85 as a user may set up in the remote thermostat. Further, any desired number of HVAC systems within the range of the RF transmission capabilities, within or without a contiguous space, can be controlled by a single remote thermostat 17.

In some environments, it may be desirable to run the ductless HVAC systems 5, 85 "in parallel" such that they are sent the same information stream. This can be achieved by sending successive transmissions from the remote thermostat 17 to the repeaters 18, 98 changing only the identification code in the second transmission. However, if it is always desired to run the systems 5, 86 in parallel, the same result can be achieved by assigning the same identification code to both repeaters 18, 98 and sending a single transmission received by the repeaters simultaneously. The same principals techniques can be employed when there are more than two ductless HVAC systems controlled from the remote thermostat 17.

In some commercially available ductless HVAC systems, each individual example is assigned its own identification code. If that is the case in a given installation, the identification code of the ductless HVAC system must also be included in the information stream originating at the remote thermostat 17 or, alternatively, be appended to the information stream by the repeater(s) 18 (98) before rebroadcast.

Referring to FIGs. 2 and 5, another embodiment of the invention employs the repeater 18 to generate control information sent via the IR beam 21 (23) to the receiver/interface 8A (8B) in response to control information received from the remote thermostat 17. More particularly, as discussed above, the control repertoire for the ductless HVAC system 5 may be stored in the memory 50 of the repeater 18 such that the remote thermostat 17 need only transmit a basic command (e.g., "start the fan") to the repeater on an RF carrier rather than the detailed operation set required to carry out each command. The repeater supervisory program is suitably extended to examine each received basic command and perform a lookup routine to find the detailed operation set (and, if necessary, the identification code of the ductless HVAC system 5) for carrying out a given command. This operation set is then sent to the receiver/interface 8A (8B) via IR beam 21 (23) for handling as previously described.

Referring also to FIG. 7, each of the repeaters 18, 98 may be implemented in the "smart" version described immediately above. It will be understood that the ductless HVAC systems 5, 85 need not necessarily be the same. With the appropriate operation set stored in the respective memories of the repeaters 19, 98, if the ductless HVAC systems 5, 85 use different operation sets or are even of different manufacture, the RF broadcast of a given basic command by the remote thermostat 17 will be correctly carried out by the integral control system in each of the dutless HVAC systems.

The remote thermostat 17 has been shown as a conveniently wall mounted unit in the room 2. However, the remote thermostat 17 can be physically implemented in any suitable manner to render it portable which permits its effective use anywhere in the contiguous spaces 1, 81 or even outside the contiguous spaces if one or both the repeaters 18, 98 are within range of the transmission capabilities of the remote thermostat.

While the principles of the invention have now been made clear in an illustrative embodiment, there will be immediately obvious to those skilled in the art many modifications of structure, arrangements, proportions, the elements, materials, and components, used in the practice of the invention which are particularly adapted for specific environments and operating requirements without departing from those principles.

## Claims

1. A thermostat system for controlling ductless space conditioning equipment, which ductless space conditioning equipment includes a receiver for receiving and detecting a light frequency control signal stream, the receiver being coupled to control circuitry native to the ductless space conditioning equipment, said thermostat system comprising:
A) a thermostat including:
1) a temperature sensor to detect ambient air temperature proximate the thermostat;
2) a thermostat processor coupled to said temperature sensor and operating to generate electronic signals which are selectively responsive to the ambient temperature; and
3) radio frequency transmission circuitry coupled to receive the electronic signals and to generate a radio frequency signal stream incorporating information representing the electronic signals generated by said thermostat processor and transmit the radio frequency signal stream; and
B) a repeater positioned within the line-of-sight to the space conditioning equipment for:
1) intercepting the radio frequency signal stream issued by said thermostat;
2) detecting the radio frequency signal stream; and
3) transmitting a signal stream developed from the radio frequency signal stream on a light frequency carrier to the ductless space conditioning equipment.

2. The thermostat system of Claim 1 in which the light frequency signal stream transmitted from said repeater to said receiver employs an infrared carrier.

3. The thermostat system of Claim 1 in which said thermostat further includes:
A) a thermostat memory in operative communication with said thermostat processor, said thermostat memory storing at least one ductless space conditioning manufacturer's control protocol; and
B) said thermostat processor accessing the control protocol information, said electronic signals comprising the control protocol information.

4. The thermostat system of Claim 2 in which said thermostat further includes:
A) a thermostat memory in operative communication with said thermostat processor, said thermostat memory storing at least one ductless space conditioning manufacturer's control protocol; and
B) said thermostat processor accessing the control protocol information, said electronic signals comprising the control protocol information.

5. The thermostat system of Claim 1 in which said repeater further includes:
A) a repeater memory storing at least one ductless space conditioning manufacturer's control protocol; and
B) said repeater processor accessing the control protocol information and developing the light frequency signal stream.

6. The thermostat system of Claim 2 in which said repeater further includes:
A) a repeater memory storing at least one ductless space conditioning manufacturer's control protocol; and
B) said repeater processor accessing the control protocol information and developing the light frequency signal stream.

7. A method for controlling a ductless HVAC system which receives control signals via an integral light frequency receiver, the method comprising:
A) generating a control signal set at a first location;
B) broadcasting the control signal set from the first location on a radio frequency carrier;
C) intercepting the control signal set on the radio frequency carrier at a second location which is within the line-of-sight of the integral light frequency receiver; and
D) retransmitting the control signal set from the second location on a light frequency carrier.

8. The method of Claim 7 in which the first location is outside the line-of-sight of the integral light frequency receiver.

9. A method for controlling a ductless HVAC system which receives control signals via an integral light frequency receiver, the method comprising:
A) selecting an HVAC operation signal at a first location;
B) broadcasting the operation signal from the first location on a radio frequency carrier;
C) intercepting the operation signal on the radio frequency carrier at a second location which is within the line-of-sight of the integral light frequency receiver;
D) generating a control signal set at the second location; and
E) transmitting the control signal set from the second location on a light frequency carrier.

10. The method of Claim 9 in which the first location is outside the line-of-sight of the integral light frequency receiver.

11. A thermostat system for selectively controlling at least first and second ductless space conditioning equipment sets, each of which ductless space conditioning equipment sets includes a receiver for receiving and detecting a light frequency control signal stream, the receiver being coupled to control circuitry native to the ductless space conditioning equipment, said thermostat system comprising:
A) a thermostat including:
1) a temperature sensor to detect ambient air temperature proximate the thermostat;
2) a thermostat processor, coupled to said temperature sensor and operating to generate electronic signals which are selectively responsive to the ambient temperature; and
3) radio frequency transmission circuitry coupled to receive the electronic signals and to generate a radio frequency signal stream incorporating information representing the electronic signals generated by said thermostat processor and transmit the radio frequency signal stream;
B) a first repeater positioned within the line-of-sight to the first space conditioning equipment for:
1) intercepting the radio frequency signal stream issued by said thermostat;
2) detecting the radio frequency signal stream; and
3) transmitting a light frequency signal stream developed from the radio frequency signal stream on a light frequency carrier to the first ductless space conditioning equipment set; and
C) a second repeater positioned within the line-of-sight to the second space conditioning equipment for:
1) intercepting the radio frequency signal stream issued by said thermostat;
2) detecting the radio frequency signal stream; and
3) transmitting a light frequency signal stream developed from the radio frequency signal stream on a light frequency carrier to the second ductless space conditioning equipment set.

12. The thermostat system of Claim 11 in which:
A) the light frequency signal stream transmitted from said first repeater to said first receiver employs an infrared carrier; and
B) the light frequency signal stream transmitted from said second repeater to said second receiver employs an infrared carrier.

13. The thermostat system of Claim 11 in which said thermostat further includes:
A) a thermostat memory in operative communication with said thermostat processor, said thermostat memory storing at least one ductless space conditioning manufacturer's control protocol; and
B) said thermostat processor accessing the control protocol information, said electronic signals comprising the control protocol information.

14. The thermostat system of Claim 12 in which said thermostat further includes:
A) a thermostat memory in operative communication with said thermostat processor, said thermostat memory storing at least one ductless space conditioning manufacturer's control protocol; and
B) said thermostat processor accessing the control protocol information, said electronic signals comprising the control protocol information.

15. A method for controlling at least first and second ductless HVAC systems, each of which ductless HVAC systems receives control signals via an integral light frequency receiver, the method comprising:
A) generating a control signal set at a first location;
B) broadcasting the control signal set from the first location on a radio frequency carrier;
C) intercepting the control signal set on the radio frequency carrier at a second location which is within the line-of-sight of the integral light frequency receiver of a first ductless HVAC system set;
D) retransmitting the control signal set from the second location on a light frequency carrier;
D) intercepting the control signal set on the radio frequency carrier at a third location which is within the line-of-sight of the integral light frequency receiver of a second ductless HVAC system set; and
E) retransmitting the control signal set from the third location on a light frequency carrier.

16. The method of Claim 15 in which the first location is outside the line-of-sight of the integral light frequency receiver of each of the first and second ductless HVAC system sets.

17. A method for controlling at least first and second ductless HVAC systems, each of which ductless HVAC systems receives control signals via an integral light frequency receiver, the method comprising:
A) selecting an HVAC operation signal at a first location;
B) broadcasting the operation signal from the first location on a radio frequency carrier;
C) intercepting the operation signal on the radio frequency carrier at a second location which is within the line-of-sight of the integral light frequency receiver of a first ductless HVAC system;
D) selectively generating a control signal set at the second location;
E) selectively transmitting the control signal set from the second location on a light frequency carrier;
F) intercepting the operation signal on the radio frequency carrier at a third location which is within the line-of-sight of the integral light frequency receiver of a second ductless HVAC system;
G) selectively generating a control signal set at the third location; and
H) selectively transmitting the control signal set from the third location on a light frequency carrier.

18. The method of Claim 17 in which the first location is outside the line-of-sight of the integral light frequency receivers of each of the first and second ductless HVAC systems.

19. The thermostat system of Claim 1 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.

20. The thermostat system of Claim 2 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.

21. The thermostat system of Claim 3 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.

22. The thermostat system of Claim 4 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.

23. The thermostat system of Claim 5 in which said repeater further includes:
A) a light frequency receiver;
B) a decoder for decoding light frequency signals received by said light frequency receiver; and
C) a programming routine stored in said repeater memory for controlling the download and storage in said repeater memory of at least one control protocol for a ductless space conditioning system via said light frequency receiver.

24. The thermostat system of Claim 6 in which said repeater further includes:
A) a light frequency receiver;
B) a decoder for decoding light frequency signals received by said light frequency receiver; and
C) a programming routine stored in said repeater memory for controlling the download and storage in said repeater memory of at least one control protocol for a ductless space conditioning system via said light frequency receiver.

25. The thermostat system of Claim 13 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.

26. The thermostat system of Claim 14 in which said thermostat further includes:
A) a light frequency receiver;
B) a decoder for decoding light frequency signals received by said light frequency receiver; and
C) a programming routine stored in said thermostat memory for controlling the download and storage in said thermostat memory of at least one control protocol for a ductless space conditioning system via said light frequency receiver.
